# EUROPEAN PATENT SPECIFICATION

(11) **EP 3 755 019 B1**
(45) Date of publication and mention of the grant of the patent: **17.04.2024**
(21) Application number: 19181733.7
(22) Date of filing: 21.06.2019
(51) Int. Cl.: H04W 4/80, H04L 12/18, H04W 84/18

(54) **METHOD AND SYSTEM FOR BROADCASTING DATA IN WIRELESS NETWORK**
VERFAHREN UND SYSTEM ZUR RUNDSENDUNG VON DATEN IN EINEM DRAHTLOSEN NETZWERK
PROCÉDÉ ET SYSTÈME POUR LA DIFFUSION DE DONNÉES DANS UN RÉSEAU SANS FIL

(43) Date of publication of application: 23.12.2020
(73) Proprietor: Carrier Corporation, Palm Beach Gardens, FL 33418 (US)
(72) Inventor: LIN, Chih-Kuang, Clonee, Dublin 15 (IE); VILLA, Davide, Cork T23X540 (IE); KUENZI, Adam, Salem, Oregon 97302-1143 (US); LANG, Michael, Salem, Oregon 97302 (US); TIWARI, Ankit, Bellevue, WA 98004 (US)
(74) Representative: Dehns

(56) References cited:
- WO-A1-2017/160223
- US-A1- 2003 227 934

## Description

The present disclosure relates to Bluetooth networks, particularly to methods of communication between Bluetooth devices in a Bluetooth low energy network.

The Bluetooth^{®} Low Energy (BLE) specification is a set of standards for wireless network technologies operating within the 2.4 - 2.4835 GHz Industrial, Scientific and Medical (ISM) band. BLE is designed to considerably reduce power consumption compared to legacy, or "Classic", Bluetooth^{®} devices.

Applications for the BLE specification include healthcare, security, fitness, and home entertainment. Within these applications, devices may utilise Bluetooth mesh profiles to communicate with other BLE devices in a network. Each device in the network can transfer data between other devices in the network, creating a so-called "mesh".

A number of previous applications (insert here) have attempted to address various issues such as increasing the speed at which a connection between BLE devices is established and for avoiding data packet collision.

According to the BLE specification, a BLE device operates across 40 channels in the 2.4 GHz band, each mapped onto a set of RF (radio frequency) channel index values 0, 1, ... , 39. Channels 0 to 36 are used for the transmission of data while channels 37, 38, and 39 are for the transmission of advertising (ADV) events.

The term "node" as used herein may refer to any device that may have BLE capability. Such devices may include smartphones, smart plugs, light bulbs, laptops, home entertainment devices or any other device that can connect to a BLE network. A node may also be able to communicate in other wireless networks, such as Wi-Fi (RTM) networks or cellular networks. A node may also be able to communicate via the Internet through such networks.

In the status quo, when a node does not have any data to send, it operates in a mode termed the "default mode". The default mode includes periodical ADV events and a low power state between the ADV events. Otherwise, if the node does have data to send, the node periodically sends periodic ADV events and inserts a scan mode between the ADV events. The scan mode is the mode in which the node is able to receive advertising packets from other nodes. The period of time over which this occurs is known as a scan window.

The ADV event comprises transmitting an ADV packet on one of the ADV channels. A first node may advertise sequentially on some or all of the three ADV channels. Similarly, if the first node is in the scan mode, the scan may occur sequentially on some or all of the three ADV channels.

If a second node is in the scan mode and detects an ADV packet sent by the first node, the second node may communicate with the first node and a data session between the first and second nodes may be established. Once the data session has been established, data can then be transferred between the first and second nodes.

These rules enable a fast data session setup for data exchanges while minimizing a node's energy consumption.

A BLE network node may also transmit a broadcast ADV packet to all devices on the network. When doing so, the broadcasting node may require that all other nodes in the network return an acknowledgment (ACK) packet, e.g., the SCAN Request packet in active scan mode or the ACK packet in multicast data mode, to the device to ensure that the broadcast data is received by all nodes on the network. This may require the ACK packet to be communicated through one or more nodes on the network in order to reach the broadcasting node. This situation may trigger simultaneous responses from multiple nodes, which may then cause collisions of ACK packets at various points in the BLE network. Active scan and multicast data delivery of BLE are examples of communications that may lead to packet collisions. Packet collisions lead to failed communications and the hindrance of data transmission in networks.

WO 2017/160223 A1 discloses a wireless mesh network and a method for explicit acknowledgement of a broadcasted message sent from receiving nodes to the broadcasting node, wherein the acknowledgement is sent after a randomised delay.

US 2003/227934 A1 (D2) discloses a multicast-broadcast system and method, wherein a message is sent from a source node to multiple destinations and the destinations that successfully receive the message send an acknowledgement message back to the source node.

Viewed from a first aspect, the present invention provides a method for communicating data between Bluetooth Low Energy (BLE) devices in a network, the BLE devices comprising a broadcasting node and multiple receiving nodes, the method comprising: broadcasting data from the broadcasting node; receiving the data at the multiple receiving nodes; transmitting an acknowledgement (ACK) packet from each receiving node of the multiple receiving nodes to the broadcasting node, wherein said each receiving node waits for a waiting period before transmitting the ACK packet, and wherein the waiting period is a varying length of time for each receiving node, wherein the waiting period is a randomly determined length of time and is further determined by information that is unique to the receiving node, wherein the information unique to each said receiving node is a MAC address of said each receiving node.

Viewed from a second aspect, the invention provides a Bluetooth Low Energy network for communicating data between Bluetooth Low Energy (BLE) devices, the network comprising: a first BLE device configured to broadcast data; and multiple BLE receiving devices configured to receive the broadcasted data; wherein the multiple receiving devices are multiple receiving nodes that are configured to transmit an acknowledgement (ACK) packet to the first device upon receipt of broadcasted data, wherein each receiving node of the multiple receiving nodes is configured to wait for a waiting period before transmitting the ACK packet; and wherein the waiting period is a varying length of time for each receiving node, wherein the waiting period is a randomly determined length of time and is further determined by information that is unique to said each receiving node, wherein the information unique to each said receiving node is a MAC address of said each receiving node. The waiting period may be related to the receiving node's distance to the node broadcasting data or the receiving node's priority.

Viewed from a third aspect the invention provides a computer program product containing instructions that, when executed by a Bluetooth Low Energy network comprising multiple nodes, causes the network to operate in accordance with the method of the first aspect.

The following describes optional features that may be combined with the method of the first aspect, the network of the second aspect or the computer programme product of the third aspect.

A node that receives broadcast data sends an ACK packet to the node broadcasting the data. The ACK function is to provide end-to-end communication assurance between broadcasting node and receiving nodes. The ACK packet format is compliance with BLE specifications in active scan mode or data mode. The reply node may include useful information, e.g., the node's neighbour density, remaining energy, link quality information, etc., in the ACK packet. This helps the broadcasting node learn the global network conditions and improves the overall network performance.

An advantage of the present invention is, by introducing a time delay at the receiving node before sending the ACK packet the likelihood of packet collisions is reduced. Alternatively, the receiving node may use Code Division Multiple Access (CDMA) to send an ACK packet. Because the CDMA transmission is orthogonal in code domain, the likelihood of ACK packets collision could be alleviated. CDMA uses orthogonal spread codes to protect the ACK delivery and requires no transmission schedule for the ACK delivery. With the CDMA option, the radio configuration and wireless signal needs to be changed.

The broadcasting node is configured to broadcast or multicast to multiple receiving nodes in a BLE network. When a broadcast packet is sent by a BLE device, the broadcasting device may require the receiving devices to transmit an acknowledgment (ACK) packet to the broadcasting device so that the broadcasting device may verify receipt of its transmission at each receiving device. Alternatively, the broadcast packet may be a command for a receiving device to return information to the broadcasting device such as battery status or temperature.

An advantage of using the present method when a broadcasting node is broadcasting data to multiple receiving nodes is that, when each of the receiving nodes transmits an ACK packet the likelihood of packet collision between ACK packets is reduced.

The waiting period before transmission of an ACK packet from one receiving node may be different from the waiting period that occurs at a different receiving node. The waiting period at one receiving node may the same as the waiting period determined for another receiving node, if the waiting period of the receiving nodes is such that the likelihood of packet collision is decreased, or at least has not been increased by having waiting periods that are equal lengths of time.

The waiting period at each node is randomised. The randomised waiting period may be any length of time greater than A. The randomised waiting period may be any length of time less than B.

The waiting period, i.e. the varying length of time, is determined in part by information that is unique to said each receiving node. The unique node information is the node's MAC address. Non-unique node information, such as a combination of RF signatures at the receiving node, receiver signal strength, and signal phase, may also be used to provide unique node information with a high probability that the information of one node will not be replicated at another node. These features are made unique in practical terms due to the time-varying wireless communication and physical surroundings. The waiting period at each receiving node may be different to the waiting period at all other receiving nodes. The waiting period at one receiving node may the same as the waiting period determined for another receiving node, if the waiting period of the receiving nodes is such that the likelihood of packet collision is decreased, or at least has not been increased by having waiting periods that are equal lengths of time.

The MAC address may be provided by a manufacturer. RF signatures may be created when the node receives a packet.

The waiting period is determined by a combination of randomisation with node information. This may further reduce the possibility of an identical waiting period because the unique node information avoids the chance of the same randomized value chosen by two or more replying nodes.

By randomising the waiting period and by determining the waiting period in part according to unique node information, the likelihood of packet collision can be further reduced. Randomisation of ACK packet transmission at each receiving node means that the chance of multiple nodes transmitting their ACK packets at the same time in response to receipt of broadcasted data is reduced.

The waiting period may be determined upon receipt of broadcasting data. Alternatively, the waiting period may be predetermined before receipt of the broadcasted data.

Changes in the network topology, density, and scalability, affect the proposed methods in terms of the number of ACK packets following the broadcast data. The increase may be linearly proportional to the network scale.

A receiving node may have to transmit an ACK packet through one or more intermediary nodes before the ACK packet can reach the broadcasting node. The intermediary nodes may also be receiving nodes.

ACK packets from downstream receiving nodes may be aggregated at intermediary nodes before being transmitted upstream. That is, multiple ACK packets may be transmitted from receiving nodes having a hop distance greater than an intermediary node to the intermediary node. The intermediary node may then hold the ACK packets and send the packets as a bundle. If the intermediary node is also a receiving node, the intermediary node may hold its own ACK packet if there are downstream receiving nodes. This bundling method is important because each ACK packet transmission has to follow the Bluetooth data communication protocols, ADV and SCAN process and data delivery. If the ACK packets are sent as a bundle, all of the packets may be delivered in one cycle of ADV and SCAN process for data session setup. Otherwise, every ACK packet delivery may use one cycle of ADV and SCAN process for the data session setup. This results in a higher ACK packet delay and energy wastes.

A BLE device may be any device that has the ability to communicate with other devices using Bluetooth low energy transmissions. Such devices may include smartphones, smart plugs, light bulbs, laptops, and home entertainment devices. BLE devices may be members of a BLE network. The BLE network may comprise a head node or gateway, where the head node is able to perform protocol conversions communicate data from the BLE network to another network that the head node is connected to. Other networks may include cellular networks, the Internet, a local intranet, and cloud networks.

In the BLE network, the BLE devices that are members of the network may be called nodes. The network may comprise any number of nodes and may be distributed so that the head node is connected to at least one node. Each node in the network may be connected directly to the head node or is connected to the head node via at least one other node. In this way, the head node is able to communicate with all nodes in a BLE network, and vice versa.

All nodes in the network may be considered to be downstream with respect to the head node and, conversely, the head node may be considered upstream of other nodes in the network. The structure of the network may be that data can travel from the head node and through other intermediary nodes before reaching a destination node. In this way, intermediary nodes may be upstream of some nodes and may be downstream of other nodes. A node that is at the edge of a network may be called an end node. Data that is transmitted from the head node to an intermediary node or end node may be considered to be travelling downstream. Data that is transmitted from an end node or intermediary node in the direction of the head node may be considered to be travelling upstream.

The BLE network may be configured to allow BLE devices to join and leave networks on the fly. The skilled person would readily understand that BLE networks may be configured to be restructured to account for new devices joining the network or current devices leaving the network. The skilled person would also readily understand that a BLE network may be configured to restructure itself to account for changes in the physical location of BLE devices in the network and/or optimise the network for efficient data transfer between devices.

The distance any particular node is away from the head node may be defined by the number of nodes data must travel through to reach that particular node. For example, a node that directly communicates with the head node may be considered one "hop" away from the head node. Likewise, a first node that communicates with the head node via a second node may be considered to be two "hops" away from the head node. In this latter case, the second node may be considered to be downstream of the head node and also upstream of the first node. In this way, it is possible to define how many hops any particular node is away from the head node. The number of hops has no bearing on the physical distance between nodes.

The hop distance for a particular node may change due to a reconfiguration of the network. Such a reconfiguration may occur for any number of reasons including, but not limited to: optimisation of the network; in response to the number of nodes in the network changing; and the physical movement of nodes in the network.

The hop distance for a particular node may be stored in the memory of said node as identifying data for that node. Other identifying data includes a MAC (media access control) address for the node. The node may store identifying data for other nodes in the network, such as neighbouring nodes.

When a node in the BLE network does not have data to send, it may maintain contact with the network by being in a default mode. The default mode may comprise the periodic emission of advertisement (ADV) events and being in a low power state between the ADV events. Periodic ADV interval range may be between 20 ms and 10240 ms, according to Bluetooth specification 4.0. The shorter the ADV interval is, more frequent the node wakes up and transmits the ADV packets, though this may lead to higher energy consumption.

A scan mode comprises a period of time in which a BLE device may receive data from an advertising BLE device. The channel on which the BLE device is scanning may be any one of the three ADV channels discussed above. The scan mode may sequentially cycle through each of the ADV channels. The period of time that the BLE device is scanning for is known as the "scan window". The period of time between scanning events is known as the "scan interval". The scan window may last for any length of duration up to a maximum length of time equal to the scan interval. The scan interval may have a defined duration. The scan window may have a defined duration that is less than the scan interval. According to Bluetooth specification 4.0, the scan window and scan interval range is between 2.5 ms and 10240 ms. The scan window may have a defined duration within a time period. This time period determines the maximum time of scanning an ADV channel. The shorter this time period is, the faster the node scans all of ADV channels and leads to a quick target discovery. The scan window may have a defined duration that is less than or equal to the scan interval.

An advertisement (ADV) event comprises the transmission of an ADV signal by a first BLE device. The purpose of this signal may be to advertise that the first BLE device is available to establish a wireless connection. The ADV signal may be detected by a second BLE device that is in scan mode and a data session may then be established between the two devises and data may be exchanged between them.

As discussed above, a BLE device may advertise on up to three advertising channels. An ADV event may comprise a BLE device transmitting an ADV signal on one, two or all three of the three available channels.

Certain embodiments of the invention will now be described by way of example only and with reference to the accompanying drawings in which:
Figure 1 shows an exemplary BLE network.
Figure 2 shows BLE devices as a broadcasting node and a plurality of receiving nodes.
Figure 3 is a flowchart illustrating a method for broadcasting data from a broadcasting node to one or more of multiple receiving nodes.
Figure 4 shows a schematic view of a pair of BLE devices.

A BLE mesh network may comprise a head node or gateway that transmits data to one or more nodes within the network. The network may comprise any number of nodes. All nodes in the network are considered to be downstream with respect to the head node and, conversely, the head node is upstream of other nodes in the network. The structure of the network may be that data can travel from the head node and through other intermediary nodes before reaching a destination node.

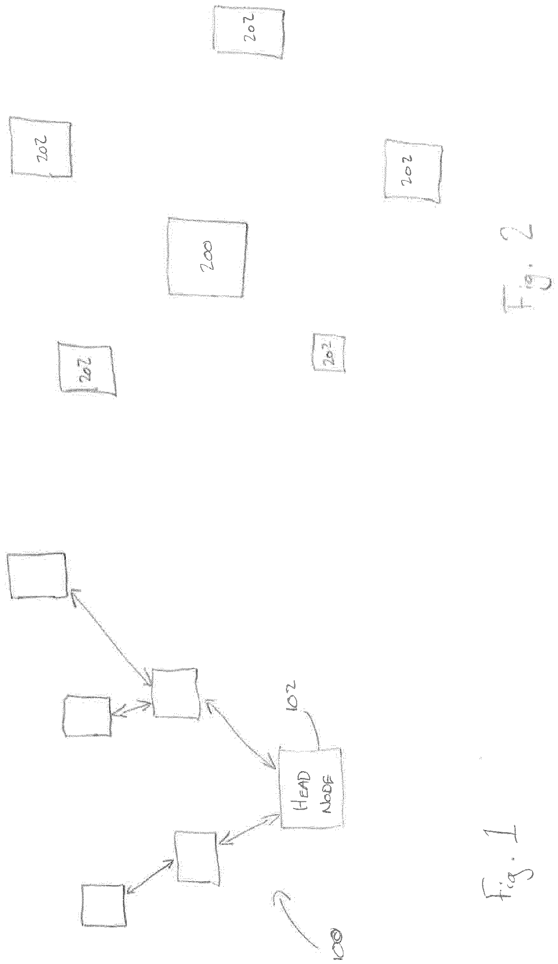

Figure 1 shows an example BLE network 100 where the network 100 is depicted as a tree. A head node 102 forms the "root" of the network 100 and devices in the BLE network form "branches" in the network. Some BLE devices are not directly connected to the head node 102; instead they are connected via a branch node. This means that any transmissions sent from the head node 102 may have to be communicated through another BLE node before the transmission reaches its destination node.

A BLE device may be configured to broadcast data to a plurality of other BLE devices. The BLE device that broadcasts data may be termed a broadcaster or a broadcasting node. A BLE device that receives broadcasted data may be termed a receiver or a receiving node.

Figure 2 shows a broadcasting node 200 and a plurality of receiving nodes 202. Each node may be able to determine its position in a BLE network relative to other nodes by storing identifying information about its neighbours. Neighbouring nodes may be defined as those that are immediately connected to a node in the network. Identifying information may include hop distance.

The broadcasting node 200 is configured to broadcast data to one or more of the plurality of receiving nodes 202. The broadcast data formation should follow the BLE specifications in data transmission. Each receiving node 202 is configured to receive data broadcast from the broadcasting node 200 and to transmit an ACK packet back to the broadcasting node 200. The broadcasting node 200 is configured to receive ACK packets from all of the receiving nodes 202 to which the broadcast data was sent.

A receiving node 202 may not be directly connected to the broadcasting node 200 in the BLE network. Upon receipt of broadcasted data, the receiving node may transmit its ACK packet via one or more intermediary nodes back to the broadcasting node 200.

Receiving nodes 202 of the exemplary BLE network are configured to coordinate transmission of ACK packets to the broadcasting node 200. One or more receiving nodes 202 are configured to introduce a time delay before transmission of an ACK packet.

The time delay is a random time delay. In this case, receiving nodes 202 are configured to receive data broadcasted from a broadcasting node 200, wait for a random length of time, and transmit an ACK packet to the broadcasting node 200. The longer the random back-off period is, the less likely ACK packet collision will occur.

The time delay is determined in part using unique node information. The unique information used includes, but is not limited to, the node ID and the node's MAC address. In this case, receiving nodes 202 are configured to receive data broadcasted from a broadcasting node 200, wait for a length of time that is determined in part by information unique to each receiving node 202, and transmit an ACK packet to the broadcasting node 200.

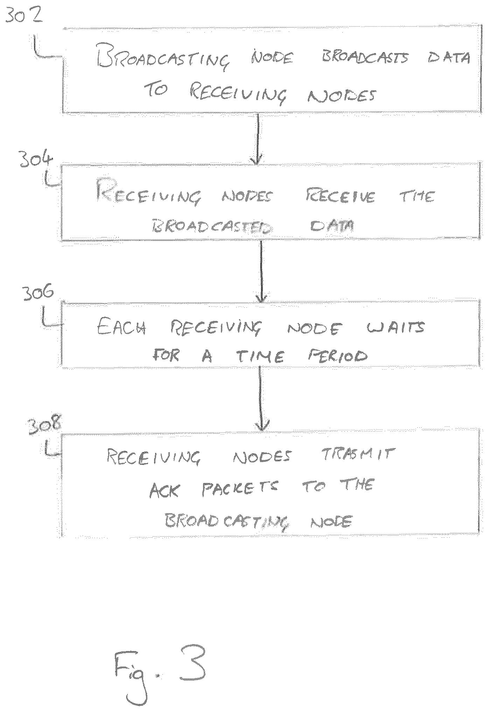

Figure 3 is a flowchart showing an exemplary method for broadcasting data from a broadcasting node to one or more of multiple receiving nodes. At step 302, a broadcasting node broadcasts data to multiple receiving nodes. At step 304, multiple receiving nodes receive the broadcasted data. At step 306, the receiving nodes wait for a waiting period, where the waiting period for each receiving node may be different. At step 308, the receiving nodes transmit an ACK packet to the broadcasting node.

At step 306, the length of the waiting period at each receiving node is a random value that is dependent in part on information unique to each node.

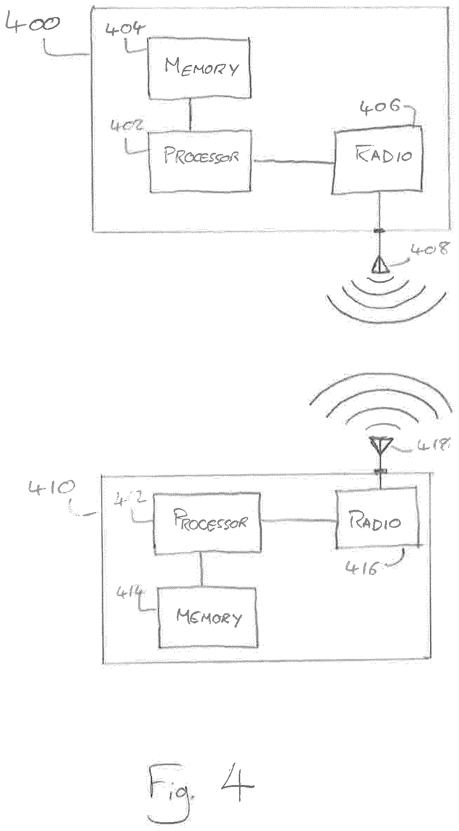

Figure 4 illustrates a pair of BLE devices 400, 410 which may utilise the methods discussed above. The BLE devices 400, 410 might be any suitable known type of device, and they are modified compared to the known devices to operate in accordance with a method as set out above. A first BLE device 400 comprises a processor 402, a memory unit 404, a radio 406, and an antenna 408. Computer program products for performing the methods described herein may be stored as an application in the memory unit 404. The memory unit 404 can be a hard drive, solid state or optical memory source. The processor 402 is configured to access and execute software, applications, and data stored on the memory unit 404.

The radio 406 is configured to receive and transmit BLE signals via the antenna. The processor 402 is configured to interface with the radio 406 and the application may be configured to control the radio 406 and antenna 408 when executed on the processor 402.

A second BLE device 410 includes similar hardware and operations to the first BLE device 400. The antenna 408 of the first BLE device 400 is configured to communicate with the antenna 418 of the second BLE device 410.

## Claims

1. A method for communicating data between Bluetooth Low Energy, BLE, devices (200, 202) in a network (100), the BLE devices (200, 202) comprising a broadcasting node (200) and multiple receiving nodes (202), the method comprising:
broadcasting data from the broadcasting node (200);
receiving the data at the multiple receiving nodes (202);
transmitting an acknowledgement, ACK, packet from each receiving node of the multiple receiving nodes (202) to the broadcasting node (200), wherein said each receiving node waits for a waiting period before transmitting the ACK packet, and wherein the waiting period is a varying length of time for each receiving node, wherein the waiting period is a randomly determined length of time and is further determined by information that is unique to said each receiving node (202),
wherein the information unique to said each receiving node (202) is a MAC address of said each receiving node (202).

2. The method of claim 1, wherein the waiting period is determined by the distance said each receiving node is from the broadcasting node.

3. The method of any preceding claim, wherein the waiting period is different for each receiving node.

4. The method of any preceding claim, wherein the waiting period is determined by information that is non-unique to said each receiving node, such as a combination of RF signatures at the receiving node, receiver signal strength, and signal phase.

5. The method of claim 4, wherein the non-unique information is a combination of RF signatures generated at said each receiving node.

6. The method of claim 4, wherein the non-unique information is a signal strength at said each receiving node.

7. The method of claim 4, wherein the non-unique information is a signal phase at said each receiving node.

8. The method of any preceding claim, wherein said each receiving node (202) sends an ACK packet using Code Division Multiple Access, CDMA.

9. A Bluetooth Low Energy network (100) for communicating data between Bluetooth Low Energy, BLE, devices, the network comprising:
a first BLE device (200) configured to broadcast data; and
multiple BLE receiving devices (202) configured to receive the broadcasted data;
wherein the multiple receiving devices are multiple receiving nodes (202) that are configured to transmit an acknowledgement, ACK, packet to the first device (200) upon receipt of broadcasted data, wherein each receiving node of the multiple receiving nodes (202) is configured to wait for a waiting period before transmitting the ACK packet; and
wherein the waiting period is a varying length of time for said each receiving node (202), wherein the waiting period is a randomly determined length of time and is further determined by information that is unique to said each receiving node, wherein the information unique to said each receiving node is a MAC address of said each receiving node (202).

10. The Bluetooth Low Energy network (100) of claim 9, further configured to operate in accordance with the method of any of claims 2 to 8.

11. A computer program product containing instructions that, when executed by a Bluetooth Low Energy network (100) comprising multiple nodes (200, 202), causes the network to operate in accordance with the method of any of claims 1 to 8.

## Patentansprüche

1. Verfahren zum Kommunizieren von Daten zwischen Bluetooth Low Energy(BLE)-Vorrichtungen (200, 202) in einem Netzwerk (100), wobei die BLE-Vorrichtungen (200, 202) einen Rundsendeknoten (200) und mehrere Empfangsknoten (202) umfassen, wobei das Verfahren umfasst:
Rundsenden von Daten von dem Rundsendeknoten (200);
Empfangen der Daten an den mehreren Empfangsknoten (202);
Übertragen eines Bestätigungs(ACK)-Pakets von jedem Empfangsknoten der mehreren Empfangsknoten (202) an den Rundsendeknoten (200), wobei jeder Empfangsknoten vor dem Übertragen des ACK-Pakets eine Wartezeit abwartet, und wobei die Wartezeit für jeden Empfangsknoten eine variierende Zeitdauer ist, wobei die Wartezeit eine zufällig bestimmte Zeitdauer ist und ferner durch Informationen bestimmt wird, die für jeden Empfangsknoten (202) eindeutig sind,
wobei die für jeden Empfangsknoten (202) eindeutigen Informationen eine MAC-Adresse jedes Empfangsknotens (202) ist.

2. Verfahren nach Anspruch 1, wobei die Wartezeit durch die Entfernung jedes Empfangsknotens von dem Rundsendeknoten bestimmt wird.

3. Verfahren nach einem der vorhergehenden Ansprüche, wobei die Wartezeit für jeden Empfangsknoten unterschiedlich ist.

4. Verfahren nach einem der vorhergehenden Ansprüche, wobei die Wartezeit durch Informationen bestimmt wird, die für jeden Empfangsknoten nicht eindeutig sind, wie eine Kombination von HF-Signaturen an dem Empfangsknoten, Empfängersignalstärke und Signalphase.

5. Verfahren nach Anspruch 4, wobei die nicht eindeutigen Informationen eine Kombination von HF-Signaturen ist, die an jedem Empfangsknoten erzeugt werden.

6. Verfahren nach Anspruch 4, wobei die nicht eindeutigen Informationen eine Signalstärke an jedem Empfangsknoten ist.

7. Verfahren nach Anspruch 4, wobei die nicht eindeutigen Informationen eine Signalphase an jedem Empfangsknoten ist.

8. Verfahren nach einem der vorhergehenden Ansprüche, wobei jeder Empfangsknoten (202) ein ACK-Paket unter Verwendung von Code Division Multiple Access (CDMA) sendet.

9. Bluetooth-Low-Energy-Netzwerk (100) zum Kommunizieren von Daten zwischen Bluetooth Low Energy(BLE)-Vorrichtungen, das Netzwerk umfassend:
eine erste BLE-Vorrichtung (200), die konfiguriert ist, Daten rundzusenden; und
mehrere BLE-Empfangsvorrichtungen (202), die konfiguriert sind, um die rundgesendeten Daten zu empfangen;
wobei es sich bei den mehreren Empfangsvorrichtungen um mehrere Empfangsknoten (202) handelt, die konfiguriert sind, um bei Empfang von rundgesendeten Daten ein Bestätigungs(ACK)-Paket an die erste Vorrichtung (200) zu übertragen, wobei jeder Empfangsknoten der mehreren Empfangsknoten (202) konfiguriert ist, um vor dem Übertragen des ACK-Pakets eine Wartezeit abzuwarten; und
wobei die Wartezeit für jeden Empfangsknoten eine variierende Zeitdauer (202) ist, wobei die Wartezeit eine zufällig bestimmte Zeitdauer ist und ferner durch Informationen bestimmt wird, die für jeden Empfangsknoten eindeutig sind, wobei die für jeden Empfangsknoten eindeutigen Informationen eine MAC-Adresse jedes Empfangsknotens (202) sind.

10. Bluetooth-Low-Energy-Netzwerk (100) nach Anspruch 9, das ferner konfiguriert ist, um gemäß dem Verfahren nach einem der Ansprüche 2 bis 8 zu arbeiten.

11. Computerprogrammprodukt, das Anweisungen enthält, die, wenn sie von einem Bluetooth-Low-Energy-Netzwerk (100), das mehrere Knoten (200, 202) umfasst, ausgeführt werden, bewirkt, dass das Netzwerk gemäß dem Verfahren nach einem der Ansprüche 1 bis 8 arbeitet.

## Revendications

1. Procédé de communication de données entre des dispositifs Bluetooth à basse énergie, BLE, (200, 202) dans un réseau (100), les dispositifs BLE (200, 202) comprenant un noeud de diffusion (200) et de multiples noeuds de réception (202), le procédé comprenant :
la diffusion de données depuis le noeud de diffusion (200) ;
la réception des données au niveau des multiples noeuds de réception (202) ;
la transmission d'un paquet d'accusé de réception, ACK, depuis chaque noeud de réception des multiples noeuds de réception (202) vers le noeud de diffusion (200), dans lequel ledit chaque noeud de réception attend pendant une période d'attente avant de transmettre le paquet ACK, et dans lequel la période d'attente est une durée variable pour chaque noeud de réception, dans lequel la période d'attente est une durée déterminée de manière aléatoire et est en outre déterminée par des informations qui sont uniques pour ledit chaque noeud de réception (202),
dans lequel les informations qui sont uniques pour ledit chaque noeud de réception (202) sont une adresse MAC dudit chaque noeud de réception (202).

2. Procédé selon la revendication 1, dans lequel la période d'attente est déterminée par la distance séparant ledit chaque noeud de réception du noeud de diffusion.

3. Procédé selon une quelconque revendication précédente, dans lequel la période d'attente est différente pour chaque noeud de réception.

4. Procédé selon une quelconque revendication précédente, dans lequel la période d'attente est déterminée par des informations qui ne sont pas uniques pour ledit chaque noeud de réception, telles qu'une combinaison de signatures RF au niveau du noeud de réception, une intensité de signal de récepteur et une phase de signal.

5. Procédé selon la revendication 4, dans lequel les informations non uniques sont une combinaison de signatures RF générées au niveau dudit chaque noeud de réception.

6. Procédé selon la revendication 4, dans lequel les informations non uniques sont une intensité de signal au niveau dudit chaque noeud de réception.

7. Procédé selon la revendication 4, dans lequel les informations non uniques sont une intensité de signal au niveau dudit chaque noeud de réception.

8. Procédé selon une quelconque revendication précédente, dans lequel ledit chaque noeud de réception (202) envoie un paquet ACK en utilisant l'accès multiple par répartition en code, AMRC.

9. Réseau Bluetooth à basse énergie (100) pour la communication de données entre des dispositifs Bluetooth à basse énergie, BLE, le réseau comprenant :
un premier dispositif BLE (200) configuré pour diffuser des données ; et
de multiples dispositifs de réception BLE (202) configurés pour recevoir les données diffusées ;
dans lequel les multiples dispositifs de réception sont de multiples noeuds de réception (202) configurés pour transmettre un paquet d'accusé de réception, ACK, au premier dispositif (200) lors de la réception de données diffusées, dans lequel chaque noeud de réception des multiples noeuds de réception (202) est configuré pour attendre pendant une période d'attente avant de transmettre le paquet ACK ; et
dans lequel la période d'attente est une période variable pour ledit chaque noeud de réception (202), dans lequel la période d'attente est une durée déterminée aléatoirement et est en outre déterminée par des informations qui sont uniques pour ledit chaque noeud de réception, dans lequel les informations uniques pour ledit chaque noeud de réception est une adresse MAC dudit noeud de réception (202).

10. Réseau Bluetooth à basse énergie (100) selon la revendication 9, configuré en outre pour fonctionner selon le procédé selon l'une quelconque des revendications 2 à 8.

11. Produit de programme informatique contenant des instructions qui, lorsqu'elles sont exécutées par un réseau Bluetooth à basse énergie (100) comprenant plusieurs noeuds (200, 202), permettent au réseau de fonctionner suivant le procédé selon l'une quelconque des revendications 1 à 8.
